# EUROPEAN PATENT SPECIFICATION

(11) **EP 2 403 892 B1**
(45) Date of publication and mention of the grant of the patent: **18.06.2014**
(21) Application number: 10705759.8
(22) Date of filing: 24.02.2010
(51) Int. Cl.: C08G 59/04, C08G 59/32, C08G 59/38, C08G 65/26, C08L 63/00

(54) **THERMOSETTABLE COMPOSITION CONTAINING A GLYCIDYLETHER BASED ON TRIMETHYLOLPROPANE OCTADECAETHOXILATE**
WÄRMEHÄRTBARE ZUSAMMENSETZUNG MIT EINEM GLYCIDYLETHER AUF BASIS VON TRIMETHYLOLPROPANOCTADECAETHOXYLAT
COMPOSITION THERMODURCISSABLE CONTENANT UN GLYCIDYL ÉTHER À BASE D'OCTADÉCA-ÉTHOXYLATE DE TRIMÉTHYLOLPROPANE

(30) Priority: 04.03.2009 US 157245 P; 07.07.2009 US 223515 P
(43) Date of publication of application: 11.01.2012
(73) Proprietor: Dow Global Technologies LLC, Midland, MI 48674 (US)
(72) Inventor: SCHROTZ, Markus, 88416 Ochsenhausen (DE)
(74) Representative: Beck Greener
(86) International application number: PCT/US2010/025179
(87) International publication number: WO 2010/101745

(56) References cited:
- FR-A- 1 308 934
- US-A- 2 538 072
- US-A- 3 240 376
- US-A- 3 575 797
- US-A1- 2003 054 173

## Description

### BACKGROUND OF THE INVENTION

### Field of the Invention

The present invention relates to a thermosettable resin composition comprising a thermosetting epoxy resin and e.g. a glycidyl ether based on trimethylolpropane octadecaethoxilate (TMP-18EO) used as a modifier for the thermosetting resin.

### Description of Background and Related Art

Glycidyl ethers (GEs) are known modifiers for epoxy resins, mainly as reactive diluents. GEs are also well known as wet strengtheners for paper and as adhesion promoters for polyester fibers. It is also known that GEs based on polyalkylenoxides are useful as flexibilizers for epoxy; and GEs in the form of their amine adducts are valuable raw materials in waterborne hardener formulations.

Most of the known GEs are based on aromatic or aliphatic alcohols having no heteroatom in their backbone. Derivatives of polyalkylenoxides (PAOs) are used widely in form of the corresponding glycols polyalkylene glycols (PAGs). Polypropylene glycol (PPG) or polybutylene glycol (PBG) are preferred, due to the limited water solubility of the products. Polyethylene glycol (PEG) based products are more difficult to obtain by using BF3 etherate-catalyzed addition of epichlorohydrin (ECH) with subsequent elimination with aqueous caustic soda, due to the high solubility of the product in aqueous media, causing problems with emulsions during process or simply by yield loss.

All GEs derived from PAGs are difunctional meaning that the PAGs reduce the network density of a cured epoxy system significantly in contrast to "classical" GEs, like 1,4- butanedioldiglycidylether (BDDGE) or 1,6- hexanedioldiglycidyleheter (HDDGE), due to their generally higher molecular mass.

Some thermosetting resins are characterized as having good toughness, and other properties such as good moisture resistance, and good processability. However, there is still needed in the industry a thermoset resin product exhibiting good toughness characteristics and which can be prepared in large scale, and which can be used in high performance applications under significant stress and moisture exposure.

For example, most conventional toughening agents, such as rubbers, core-shell particles, thermoplastic block polymers, have a high molecular weight to initiate suitable toughening mechanisms. The high molecular weight, however, has an undesirable effect on the viscosity of the uncured thermoset formulation. Because of the high viscosity, these formulations cannot be used to prepare compositions that need to diffuse into small cavities, and they also cannot be used with conventional processes (e.g., because of limitations of the pumps). To lower the viscosity of these conventional formulations, the processing temperature of the formulation is increased, but this also leads to shortened pot life.

It would be desirable to provide a glycidyl ether based on TMP-18EO as modifier for resin systems that imparts a good processability property while maintaining the resins excellent toughening properties.

The use of polyethylene oxide-containing block copolymer has been described as an effective toughener. The polyethylene oxide block acts as a compatibilizer with the epoxy formulation, while the second block is non-miscible, leading to a micro-phase separation. However, such a product is inherently limited by its poor thermal stability and its low water resistance. When combined in a thermoset network such as an epoxy network, the water uptake drastically increases, probably because of the highly hydrophilic character of the polyethylene oxide chain.

Heretofore, known processes have not disclosed the use of a modifier such as a glycidyl ether based on TMP-18EO as a toughener for thermosetting resins such as epoxy resins. For example, German Patent No. DE 3824676 discloses a tetraglycidylether of tetramethylolcyclohexanon for hot curing systems.

JP 2007284467 discloses, among other things, a polyoxyalkylene diglycidyl ether for providing an epoxy resin composition having excellent high flexibility and excellent adhesiveness and impact resistance. The epoxy resin composition described in JP 2007284467 comprises a diglycidyl ether (A) of a bisphenol A-alkylene oxide adduct, a polyoxyalkylene diglycidyl ether (B) and/or a dimer acid diglycidyl ester (C), a bisphenol type epoxy resin (D) and/or an aromatic epoxy resin (E) having a glycidylamino group and a curing agent reactive with the epoxy resin in specific proportions.) US 2003/054173 A1 discloses sprayable coatings that include a rigid epoxy resin and a flexible epoxy resin. FR 1 308 934 A discloses synthesis of glycidyl ethers.

In addition, the prior art teaches the use of GE as polyester sizing agent, e.g. for tires. References that teach the use of GEs include, for example, the following patents: EP 1221456 discloses "sorbitol-epoxy"; U.S. Patent No. 4,348,517 discloses glycerol-TGE; JP002001003273 discloses glycerol-polyGE; JP000055152816 and JP000055152815 disclose glycerol-DGE and TGE; JP000008246353 discloses glycerol-polyGE; and EP1442900 discloses TMP-TGE.

The prior art also teaches combinations of NBR polymer with epoxy resin, wherein the NBR is known to act as impact strengthener, for example, as described in Frounchi ct al., "Toughening Epoxy Resins with Solid Acrylonitrile-Butadiene Rubber", Polymer International, Volume 49, Issue 2, Pages 163 - 169, published online: 17 Jan 2000, Society of Chemical Industry 2009.

Molecules like TMP-18EO-TGE per se are known and the synthesis of such molecules are described in U.S. Patent No. 3,575,797. Also, the flexibilizing of epoxy resin systems by incorporating EO/PO/BuO chains within the epoxy resin molecule is known. However, it is also known that typically a certain amount of alkylenoxide is required in order for the alkylenoxide to be incorporated into the system to achieve a level of flexibility. This certain amount is usually so high that it weakens the polymer matrix. The weakness in the polymer matrix can be shown by decrease of the chemical resistance of such matrix.

It would be an advance in the art if a GE modifier such as TMP 18EO TGE could be used in epoxy resin systems instead of other known GEs such as for example, an epoxidized PEG or PPG (di-functional), in order to enhance flexibility and show only a minor decrease in chemical resistance. Accordingly, there is a need in the industry to develop a modifier that will provide a thermosetting resin with such improved properties.

### SUMMARY OF THE INVENTION

The present invention solves the problems of the prior art by the synthesis and use of a triglycidyl ether (TGE) derived from a triol with a least 3 moles ethylene oxide per OH group added to the triol, before converting it into the corresponding glycidyl ether.

One aspect of the present invention is directed to a thermosettable resin composition comprising (a) at least one thermosetting epoxy resin; and (b) at least one toughening agent; wherein the at least one toughening agent is a polyglycidyl ether derived from a triol having at least 9 moles ethylene oxide added to the triol, before converting the triol into the corresponding glycidyl ether, wherein the at least one thermosetting epoxy resin (a) is present in the composition in an amount of from 75 weight percent to 95 weight percent, and the at least one toughening agent (b) is present in the composition in an amount of from 5 weight percent to 25 weight percent, both based on the combination of components (a) and (b).

The present invention combines the desired properties, flexibilizing by non reduced network density into one molecule, preferentially being a polymer. In addition, the polymer of the present invention may be useful as a polymeric substitute for the product pentaerythrol-TGE (a paper wet strengthener). Also, the present invention could be useful in terms of acting as an adhesion promoter for polyester.

Other aspects of the present invention include a cured thermoset product made from the above thermosettable composition; and a process for making the thermosettable composition or the thermoset product.

### BRIEF DESCRIPTION OF THE DRAWINGS

For the purpose of illustrating the present invention, the drawings show a form of the present invention which is presently preferred. However, it should be understood that the present invention is not limited to the precise arrangements shown in the drawings.

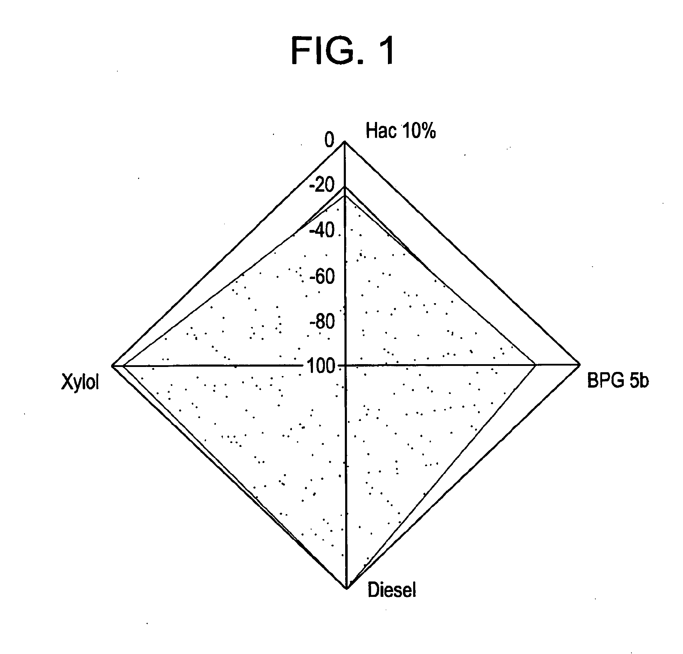

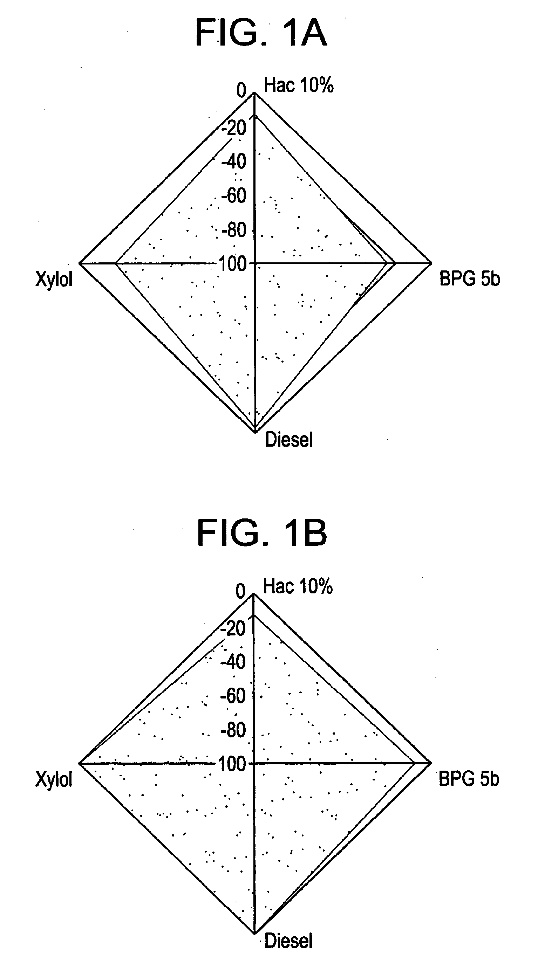

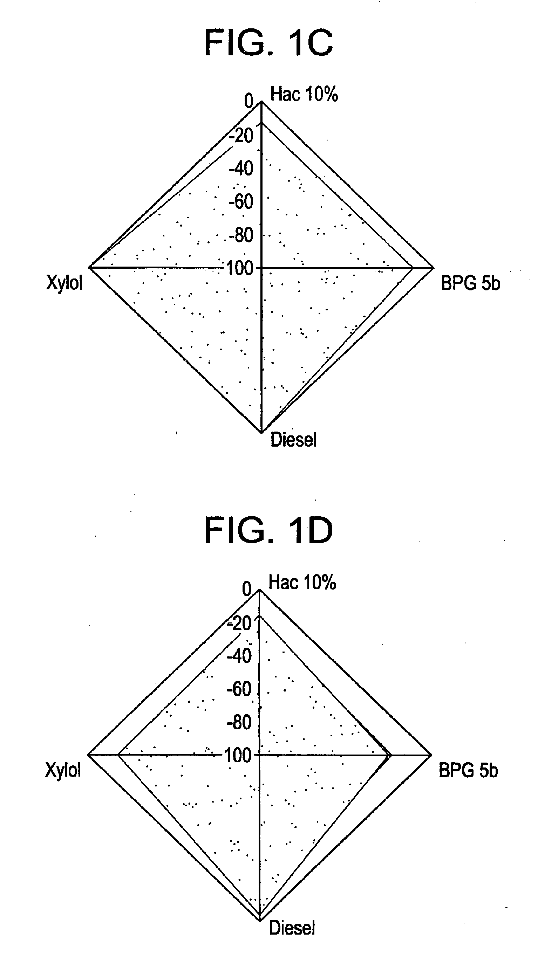

Figure 1 is a graphical illustration showing the results of a chemical resistance testing of a 2 mm film of a cured system of the present invention.
Figures 1A - 1D are several graphical illustrations each showing the results of a chemical resistance testing of a 2 mm film of cured systems of known modifiers blended with an epoxy resin.

The area of the diamond of each illustration in Figure 1 and Figures 1A- 1D, is proportional to the chemical resistance.

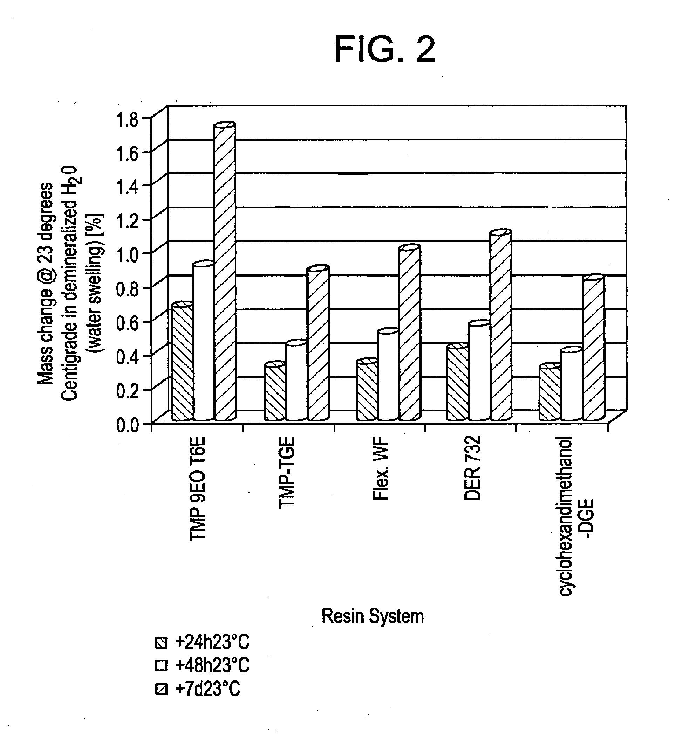

Figure 2 is a graphical illustration in the form of a bar chart showing the water uptake of a cured system of the present invention compared to other cured systems. While the water uptake for the TMP 18EO TGE modified system is greater as compared to known systems, the water uptake was surprisingly better than expected.

### DETAILED DESCRIPTION OF THE INVENTION

To provide context for the following detailed description, some definitions may be helpful. "Thermosettable compositions" are compositions that include elements that may be included and mixed together, or reacted, to form a "thermoset product." As some of the elements of a "thermosettable composition" may react with one or more of such elements, the original elements of a thermosettable composition may no longer be present in the final "thermoset product." A "thermoset product" will generally include a "thermoset network," which is descriptive of the structure formed by a "thermosetting resin," examples of which are well known in the art.

In its broadest scope, the present invention provides a thermosettable composition comprising (a) at least one thermosetting resin, and (b) at least one toughening agent; wherein the at least one toughening agent is a polyglycidyl ether preferably based on trimethylolpropane octadecaethoxilate (TMP-18EO).

The thermosetting resin, component (a) of the present invention, may be any resin that is thermosettable with heat, i.e., curable or crosslinkable at a curing temperature to form a thermoset network.

The thermosetting resin, component (a) of the present invention, may be selected from any of the well known thermosetting resins known in the art including for example epoxy resins, isocyanate resins, (meth)acrylic resins, phenolic resins, vinylic resins, styrenic resins, polyester resins, and mixtures thereof.

In one embodiment, the thermosetting resin useful in the present invention is an epoxy resin. The thermosettable (or curable) epoxy resin composition of the present invention includes at least one epoxy resin component (a). Epoxy resins are those compounds containing at least one vicinal epoxy group. The epoxy resin may be saturated or unsaturated, aliphatic, cycloaliphatic, aromatic or heterocyclic and may be substituted. The epoxy resin may also be monomeric or polymeric.

Preferably the epoxy resin component is a polyepoxide. Polyepoxide as used herein refers to a compound or mixture of compounds containing more than one epoxy moiety. Polyepoxide as used herein includes partially advanced epoxy resins that is, the reaction of a polyepoxide and a chain extender, wherein the reaction product has, on average, more than one unreacted epoxide unit per molecule. Aliphatic polyepoxides may be prepared from the known reaction of epihalohydrins and polyglycols. Other specific examples of aliphatic epoxides include trimethylpropane epoxide, and diglycidyl-1,2-cyclohexane dicarboxylate. Preferable compounds which can be employed herein include, epoxy resins such as, for example, the glycidyl ethers of polyhydric phenols, that is, compounds having an average of more than one aromatic hydroxyl group per molecule such as, for example, dihydroxy phenols, biphenols, bisphenols, halogenated biphenols, halogenated bisphenols, alkylated biphenols alkylated bisphenols, trisphenols, phenol-aldehyde novolac resins, substituted phenolaldehyde novolac resins, phenol-hydrocarbon resins, substituted phenol-hydrocarbon resins and any combination thereof.

Optionally, the epoxy resins used in the resin composition of the present invention is at least one halogenated or halogen-containing epoxy resin compound. Halogen-containing epoxy resins are compounds containing at least one vicinal epoxy group and at least one halogen. The halogen can be, for example, chlorine or bromine, and is preferably bromine. Examples of halogen-containing epoxy resins useful in the present invention include diglycidyl ether of tetrabromobisphenol A and derivatives thereof. Examples of the epoxy resin useful in the present invention include commercially available resins such as D.E.R. ™ 500 series, commercially available from The Dow Chemical Company.

The halogen-containing epoxy resin may be used alone, in combination with one or more other halogen-containing epoxy resins, or in combination with one or more other different non-halogen-containing epoxy resins. The ratio of halogenated epoxy resin to non-halogenated epoxy resin is preferably chosen to provide flame retardancy to the cured resin. The weight amount of halogenated epoxy resin which may be present may vary depending upon the particular chemical structure used (due to the halogen content in the halogenated epoxy resin), as is known in the art. It also depends on the fact that other flame retardants might be present in the composition, including the curing agent and optional additives. The preferred halogenated flame retardants are brominated compound, preferably diglycidyl ether of tetrabromobisphenol A and derivatives thereof.

The epoxy resin compounds other than the halogen-containing epoxy resin utilized in the composition of the present invention may be, for example, an epoxy resin or a combination of epoxy resins prepared from an epihalohydrin and a phenol or a phenol type compound, prepared from an epihalohydrin and an amine, prepared from an epihalohydrin and a carboxylic acid, or prepared from the oxidation of unsaturated compounds.

In one embodiment, the epoxy resins utilized in the compositions of the present invention include those resins produced from an epihalohydrin and a phenol or a phenol type compound. The phenol type compound includes compounds having an average of more than one aromatic hydroxyl group per molecule. Examples of phenol type compounds include dihydroxy phenols, biphenols, bisphenols, halogenated biphenols, halogenated bisphenols, hydrogenated bisphenols, alkylated biphenols, alkylated bisphenols, trisphenols, phenol-aldehyde resins, novolac resins (i.e. the reaction product of phenols and simple aldehydes, preferably formaldehyde), halogenated phenol-aldehyde novolac resins, substituted phenol-aldehyde novolac resins, phenol-hydrocarbon resins, substituted phenol-hydrocarbon resins, phenol-hydroxybenzaldehyde resins, alkylated phenol- hydroxybenzaldehyde resins, hydrocarbon-phenol resins, hydrocarbon- halogenated phenol resins, hydrocarbon-alkylated phenol resins, or combinations thereof.

In another embodiment, the epoxy resins utilized in the compositions of the invention preferably include those resins produced from an epihalohydrin and bisphenols, halogenated bisphenols, hydrogenated bisphenols, novolac resins, and polyalkylene glycols, or combinations thereof. Examples of bisphenol A based epoxy resins useful in the present invention include commercially available resins such as D.E.R. ™ 300 series and D.E.R. ™ 600 series, commercially available from The Dow Chemical Company. Examples of epoxy Novolac resins useful in the present invention include commercially available resins such as D.E.N. ™ 400 series, commercially available from The Dow Chemical Company.

In one embodiment, the epoxy resin of the present composition includes DER™ 331, DER™ 330, DER™ 354 or mixtures thereof.

In another embodiment, the epoxy resin compounds utilized in the compositions of the invention preferably include those resins produced from an epihalohydrin and resorcinol, catechol, hydroquinone, biphenol, bisphenol A, bisphenol AP (1,1-bis(4- hydroxyphenyl)-1-phenyl ethane), bisphenol F, bisphenol K, tetrabromobisphenol A, phenol-formaldehyde novolac resins, alkyl substituted phenol-formaldehyde resins, phenol- hydroxybenzaldehyde resins, cresol-hydroxybenzaldehyde resins, dicyclopentadiene-phenol resins, dicyclopentadiene-substituted phenol resins, tetramethylbiphenol, tetramethyl-tetrabromobiphenol, tetramethyltribromobiphenol, tetrachlorobisphenol A, or combinations thereof. Preferably, the epoxy resin composition of the present invention contains diglycidyl ether of tetrabromobisphenol A.

The preparation of such compounds is well known in the art. See, for example, Kirk-Othmer, Encyclopedia of Chemical Technology, 3rd Ed., Vol. 9, pages 267-289. Examples of epoxy resins and their precursors suitable for use in the compositions of the invention are also described, for example, in U.S. Patent Nos. 5,137,990 and 6,451,898, which are incorporated herein by reference.

In another embodiment, the epoxy resins utilized in the compositions of the present invention include those resins produced from an epihalohydrin and an amine. Suitable amines include diaminodiphenylmethane, aminophenol, xylene diamine, anilines, and the like, or combinations thereof.

In another embodiment, the epoxy resins utilized in the compositions of the present invention include those resins produced from an epihalohydrin and a carboxylic acid. Suitable carboxylic acids include phthalic acid, isophthalic acid, terephthalic acid, tetrahydro- and/or hexahydrophthalic acid, endomethylenetetrahydrophthalic acid, isophthalic acid, methylhexahydrophthalic acid, and the like or combinations thereof.

In another embodiment the epoxy resin refers to an advanced epoxy resin which is the reaction product of one or more epoxy resins components, as described above, with one or more phenol type compounds and/or one or more compounds having an average of more than one aliphatic hydroxyl group per molecule as described above. Alternatively, the epoxy resin may be reacted with a carboxyl substituted hydrocarbon, which is described herein as a compound having a hydrocarbon backbone, preferably a C1-C40 hydrocarbon backbone, and one or more carboxyl moieties, preferably more than one, and most preferably two. The C1-C40 hydrocarbon backbone may be a straight- or branched- chain alkane or alkene, optionally containing oxygen. Fatty acids and fatty acid dimers are among the useful carboxylic acid substituted hydrocarbons. Included in the fatty acids are caproic acid, caprylic acid, capric acid, octanoic acid, decanoic acid, lauric acid, myristic acid, palmitic acid, stearic acid, palmitoleic acid, oleic acid, linoleic acid, linolenic acid, erucic acid, pentadecanoic acid, margaric acid, arachidic acid, and dimers thereof.

The epoxy resin, component (a), of the present invention may be selected from, for example, oligomeric and polymeric diglycidyl ether of bisphenol A, oligomeric and polymeric diglycidyl ether of tetrabromobisphenol A, oligomeric and polymeric diglycidyl ether of bisphenol A and tetrabromobisphenol A, epoxydized phenol Novolac, epoxydized bisphenol A Novolac, oxazolidone-modified epoxy resins and mixtures thereof.

In another embodiment, the epoxy resin is the reaction product of a polyepoxide and a compound containing more than one isocyanate moiety or a polyisocyanate. Preferably, the epoxy resin produced in such a reaction is an epoxy-terminated polyoxazolidone.

In another embodiment, the epoxy resin useful in the present invention may be an epoxy resin modified with, for example, other non-polymeric glycidyl ethers (GEs). For example, the epoxy resin may be modified with non-polymeric GEs selected from o-cresyl-monoglycydylether (oCMGE), p-t-butylphenyl-monoglycidylether ptBPMGE, HDDGE, BDDGE, neopentylglycoldigycidylether (NPGDGE), C12/C14-fatty alcohol monoglycidylether, mixtures thereof and the like.

The epoxy resin component (a) is present in the composition of the present invention at a concentration ranging generally from about 99 weight percent (wt%) to about 50 wt%, preferably from about 96 wt% to about 60 wt%, and more preferably from about 95 wt% to about 75 wt% as calculated on the thermosetting resinous component (a). Above the concentration of about 99 wt %, the effect of the modifier used with the component (a) resin is to low to alter the polymer matrix significantly; and below about 50 wt %, the mechanical and chemical properties of the cured system deteriorate.

The polyglycidyl ether toughening agent, component (b), of the present invention, comprises a molecule or chemical class of glycidyl ethers (GEs) with a special structure. The special structure of the polyglycidyl ether useful in the present invention comprises a tri-functional molecule, i.e., a triglycidyl ether (TGE) with widely spaced epoxy groups. While not be limited to a certain theory, from the experiments carried out by the Applicants, it is believed that the special structure (trifunctional with widely spaced epoxy groups) is responsible for the resulting toughness and water swelling resistance properties, the TGE provides to the thermoset epoxy resin matrix.

The special structure of TGE of the present invention provides a different solution to enhance the properties of a thermosetting resin that what is known from prior art solutions.

The TMP part of the TGE can be considered as a kind of a "hard" part in the polymeric network, while the 3 small EO chains act as "soft" parts for the modifier. By spacing epoxy groups apart, the combination of properties (impact resistance enhancement by minor increased water swelling resistance) are obtained.

In a preferred embodiment, the toughening agent useful in the present invention comprises a polyglycidyl ether preferably based on trimethylolpropane octadecaethoxilate (TMP-18EO).

For example, the toughening agent may be a polyglycidyl ether of the following Formula I: 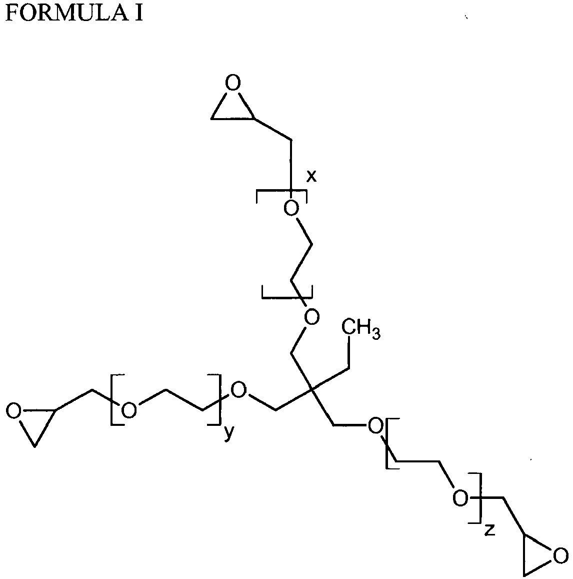 wherein x,y,z are independently of each other > 3 and x+y+z approx. 18.

TMP-18EO means the polymeric conversion product of 1 mole TMP with 18 moles EO. 18 is the average number of EO moieties connected to 1 TMP molecule. "> 3" molecules EO per OH-group is an idealized number. The product has a distribution with an average degree of substituted initial OH groups of about 2.5 and an average chain lenghth of about 7.3 . Polyglycidylether of TMP-18EO means the reaction product of 1 mole TMP-18EO with 3 moles epichlorohydrin (ECH) and sodium hydroxide (NaOH), subsequently. The ratio of TMP-18EO to ECH may vary from 1:2 up to 1:6.

The improvements observed with the embodiments of the present invention are believed to relate to the use of a glycidyl ether based on TMP-18EO as modifier for resin systems, and more particularly, to the use of a glycidyl ether based on TMP-18EO as modifier for resin systems having preferred structures, in the thermoset products. While not wishing to be bound by any particular theory of operation, it appears that the glycidyl ether based on TMP-18EO as modifier for resin systems act as toughening agents, reduce moisture uptake in the thermoset network, while maintaining low viscosity in the uncured composition because of low viscosity. The presence of the glycidyl ether based on TMP-18EO as modifier for resin systems, as used herein, imparts greater toughness and lower moisture uptake, as compared to thermoset networks lacking the glycidyl ether based on TMP-18EO as modifier for resin systems.

It is surprising that a glycidyl ether based on TMP-18EO as modifier for resin systems does not decrease the water resistance of epoxy network significantly.

According to the present invention, there is a possibility to graft the glycidyl ether based on TMP-18EO additive in the thermoset network through the reactive groups. Most of the conventional tougheners are not reactive - they are physically linked to the network (by entanglement) but not chemically bonded. Therefore, the tougheners of the prior art can migrate through the network, especially at high temperature (which is referred to as "creeping"). In embodiments of the present invention, the glycidyl ether based on TMP-18EO as modifier for resin systems can be reactive with the thermoset system and consequently be incorporated into the final network. Accordingly, migration of the toughening agent is prevented, even at high temperature.

Still further, silicone resins are known to work as release agents or surfactants. In these applications, it is generally desired that they migrate to the surface. It is surprising that a glycidyl ether based on TMP-18EO as modifier for resin systems, as used in embodiments herein, remain well dispersed within the bulk of the thermoset network, without migrating to the surface.

When block polymers are conventionally used as toughening agents, a specific sequence of blocks is relied upon to enable proper phase separation. In the instant embodiments, it is surprising to see that a glycidyl ether based on TMP-18EO as modifier for resin systems create suitable phase separation even if they are grafted, instead of having a block structure. The chemical composition, in addition to the physical structure, appears to be important to this advantage of the invention.

Still further, the instant uncured compositions exhibit lower viscosity than conventional uncured compositions using conventional toughening agents, leading to better processability and easier handling with the present invention. The lower viscosity of the glycidyl ether based on TMP-18EO as modifier for resin systems also enables higher load levels of filler, while maintaining high processability and mechanical properties, as compared to other toughening agents. The glycidyl ether based on TMP-18EO as modifier for resin systems in the thermoset networks of the invention enable an improved coefficient of thermal expansion and reduced shrinkage of cast formulations. The thermoset networks prepared according to the present invention are especially suitable for high performance applications, including, for example, electrical and electronics casting, potting, and encapsulation.

The glycidyl ether based on TMP-18EO, component (b), is readily available commercially and may be obtained, for example, from Seppic under the trade name Simulsol TOZE. Alternatively, component (b) may be produced by processes known in the art such as the process described in U.S. Patent No. 3,575,797 incorporated herein by reference. A general procedure for synthesizing the glycidylether TMP-18EO-TGE of the present invention is described in Example 1 below.

The glycidyl ether based on TMP-18EO, component (b), is present in the composition of the present invention at a concentration ranging generally from about 1 weight percent (wt%) to about 50 wt%, preferably from about 4 wt% to about 40 wt%, and more preferably from about 5 wt% to about 25 wt%. Below the concentration of 1 wt%, the effect of the modifier is to low to alter the polymer matrix significantly; and above the concentration of 50 wt%, the mechanical and chemical properties of the resultant cured system may tend to deteriorate.

The TGE polyglycidyl ether, component (b), of the present invention may be formed by starting from an at least a trifunctional alcohol, and at least 3 moles of EO per -OH, converted into a TGE by a known process. The high yield in a standard process with aqueous caustic was unexpected. The properties of the TGE itself, especially toughness enhancer by minor enhanced water swelling resistance for epoxy were not foreseen. To act as adhesion promoter for polyester/rubber with properties superior to the marked-known products, glycerol-TGE and polyglycerol-PGE was not foreseeable, because the mechanism is not fully understood.

The thermosettable composition according to the present invention may further include one or more optional components or additives including for example, hardeners, catalysts, additional reactive resins, fillers, toughening agents other than component (b), curing inhibitors, wetting agents, colorants, thermoplastics, processing aids, dyes, UV-blocking compounds, and fluorescent compounds. This list is intended to be exemplary and not limiting. These optional components are used for their intended purpose as is known by the skilled artisan; and used in amounts that will provide the intended effect without detrimentally affecting the desired properties of the final thermosettable composition or thermoset product thereof. The concentration of the optional components will depend on various factors, including the end use/application in which the optional components are used.

For example, the thermosettable composition of the present invention may further comprise at least one hardener for the at least one thermosetting resin. Hardeners may be chosen from, but are not limited to, amines, polyamide amines, phenolic resins, carboxylic acids, carboxylic anhydrides, and polyol resins. In embodiments wherein the thermosetting resin comprises an epoxy resin, the at least one hardener is preferably chosen from amines, phenolic resins, carboxylic acids, and carboxylic anhydrides. In embodiments wherein the thermosetting resin comprises an isocyanate, the at least one hardener is preferably chosen from polyols.

In general, the hardener useful in the present invention may be selected from amine type hardeners known in the art; and the concentration of the hardener may be present in a predetermined amount such that every epoxy group in the resin can react with an amine hydrogen. Therefore, a skilled artisan can calculate that 1 epoxy equivalent weight (EEW) reacts with 1 hydrogen equivalent weight (HEW) within an accuracy of +/- 10 %.

Generally, the hardener may be present in the composition of the present invention at a concentration ranging generally from about 0 wt% to about 50 wt%, and preferably from about 10 wt% to about 40 wt%.

The thermosettable composition of the present invention optionally may include at least one catalyst for polymerization, including homopolymerization, of the at least one thermosetting resin, or for a reaction between the at least one thermosetting resin and the at least one hardener. A wide variety of catalysts known in the art may be used.

For example, particularly suitable optional catalysts useful in the present invention are those quaternary phosphonium and ammonium compounds such as, for example, ethyltriphenylphosphonium chloride, ethyltriphenylphosphonium bromide, ethyltriphenylphosphonium iodide, ethyltriphenylphosphonium acetate, ethyltriphenylphosphonium diacetate (ethyltriphenylphosphonium acetate.acetic acid complex), ethyltriphenylphosphonium tetrahaloborate, tetrabutylphosphonium chloride, tetrabutylphosphonium acetate, tetrabutylphosphonium diacetate (tetrabutylphosphonium acetate.acetic acid complex), tetrabutylphosphonium tetrahaloborate, butyltriphenylphosphonium tetrabromobisphenate, butyltriphenylphosphonium bisphenate, butyltriphenylphosphonium bicarbonate, benzyltrimethylammonium chloride, benzyltrimethylammonium hydroxide, benzyltrimethylammonium tetrahaloborate, tetramethylammonium hydroxide, tetrabutylammonium hydroxide, tetrabutylammonium tetrahaloborate, and mixtures thereof and the like.

Other suitable catalysts include ammonium compounds such as, for example, triethylammonium chloride, triethylammonium bromide, triethylammonium iodide, triethylammonium tetrahaloborate, tributylammonium chloride, tributylammonium bromide, tributylammonium iodide, tributylammonium tetrahaloborate, N,N'-dimethyl-1,2-diaminoethane.tetrahaloboric acid complex, and mixtures thereof and the like.

Other suitable catalysts include quaternary and tertiary ammonium phosphonium, and arsonium adducts or complexes with suitable non-nucleophilic acids such as, for example, fluoboric, fluoarsenic, fluoantimonic, fluophosphoric, perchloric, perbromic, period, mixtures thereof and the like.

Other suitable catalysts include tertiary amines such as, for example, triethylamine, tripropylamine, tributylamine, 2-methylimidazole, benzyldimethylamine, mixtures thereof and the like.

In one embodiment, the catalyst for the epoxy-amine reaction may be a tertiary amine, an alkylphenol or a salicylic acid. The catalyst can be used in an amount that may add up to about 50% of component (b), for example, the amine hardener.

Generally, no catalyst is necessary for the amine or polyaminoamide reaction product.

In general, the concentration of the optional catalyst is from 0 wt% to about 10 wt%; preferably from about 0.001 wt% to about 10 wt%, more preferably from about 0.01 wt% to about 5 wt%, and even more preferably from about 0.1 wt% to about 2 wt%, based on the total weight of the composition. Above the range of 10 wt%, the reaction may be too fast and the composition may not be able to be processed under conventional processing conditions. Below the range of 0.001 wt%, the reaction may be too slow and the composition may not be able to be processed under conventional processing conditions.

The thermosettable composition of the present invention may further include a second reactive resin different from the at least one thermosetting resin (a) and different from the at least one hardener. The second reactive resins useful in the present invention may form a part of the cross-linked network. Examples of such thermosetting resins include isocyanate resins, (meth)acrylic resins, phenolic resins, melamine resins, vinylic resins, vinylester resins, styrenic resins, silicone resins, polyester resins, hydrocarbon resins, and mixtures thereof.

The concentration of the optional additional reactive resin is generally between 0 and 50 wt%, preferably between about 0.5% by weight to about 50% by weight, preferably between about 1% to about 40%, more preferably between about 2% to about 30%, and most preferably between about 5% to about 25% based on the weight of the total components in the composition. Above 50 wt%, the additional reactive resin becomes the main resin. Below 0.5 wt%, the concentration is not large enough to make a difference in properties.

The thermosettable composition of the present invention may further include at least one solvent; or at least one high boiling modifier such as benzyl alcohol or diisopropylnaphthalene. Preferably, the optional solvent may be high boiling solvents, for example having a boiling point of higher than about 200 °C. Low boiling solvents should be avoided such as those having a boiling point of lower than about 56 °C. In one embodiment, the solvent useful in the present invention has a boiling point of from about 56 °C or higher, preferably above about 200 °C, most preferably above about 250 °C, and even more preferably from about 250 °C to about 350 °C; because solvents above about 250 °C are not considered organic volatile compounds (VOC).

The optional solvents useful in the present invention may include for example ketones, alcohols, water, glycol ethers, aromatic hydrocarbons and mixtures thereof. Preferred solvents include acetone, methyl ethyl ketone, methyl isobutyl ketone, cyclohexanone, methylpyrrolidinone, propylene glycol monomethyl ether, propylene glycol monomethyl ether acetate, ethylene glycol monomethyl ether, methyl amyl ketone, methanol, isopropanol, toluene, xylene, dimethylformamide (DMF) and the like. A single solvent may be used, but also separate solvents may be used for one or more components. Preferred solvents for the epoxy resins and curing agents are ketones, including acetone, methylethyl ketone and the like, and ether alcohols such as methyl, ethyl, propyl or butyl ethers of ethylene glycol, diethylene glycol, propylene glycol or dipropylene glycol, ethylene glycol monomethyl ether, or 1-methoxy-2-propanol, and the respective acetates. Preferred solvents for the catalyst of the present invention include alcohols, ketones, water, dimethylformamide (DMF), glycol ethers such as propylene glycol monomethyl ether or ethylene glycol monomethyl ether, and combinations thereof.

In general, high boiling solvents may be added to the composition in a concentration of up to about 40 wt% based on the total components in the composition. The concentration of the optional solvent is generally between about 0 wt% to about 40 wt%, preferably between about 1 wt% to about 40 wt%, more preferably between about 2 wt% to about 40 wt%, and most preferably between about 5 wt% to about 40 wt% based on the weight of the total components in the composition. Above the concentration of 40 wt%, the mechanical properties of the thermoset resin tend to deteriorate.

The thermosettable composition of the present invention may further include at least one or more fillers or fibrous reinforcements. Examples of such fillers include, but are not limited to, inorganic fillers, including, but not limited to, silica, talc, quartz, mica, aluminum hydroxide, magnesium hydroxide, and boehmite.

The concentration of the filler, such as inorganic filler, may range from about 1 to about 95 wt%, or from about 2 to about 90 wt%, or from about 3 to about 80 wt%, or from about 5 to about 70 wt%, or from about 10 to about 65 wt%, based on the total weight of the composition excluding the weight of volatiles. Using a filler below the aforementioned concentrations results in almost no benefit to the mechanical properties of the thermoset resin; and above the concentrations is too expensive to be of economic benefit.

The average particle size of the inorganic filler will generally be less than about 5 mm, such as less than about 100 microns, or less than about 50 microns, or even less than about 10 microns. The average particle size of the inorganic filler will be greater than about 2 nm, or greater than about 10 nm, or greater than about 20 nm, or greater than about 50 nm. Using a filler with a particle size above the aforementioned sizes results in almost no benefit to the mechanical properties of the thermoset resin.

The present invention comprises synthesizing and using a TGE derived from a triol with a least 9 moles ethylene oxide added to it. The synthesis used is a well known route via BF3 catalyzed ECH addition and subsequent elimination with aqueous caustic soda without any special process engineering such as described for example in F. Lohse in Houben-Weyl, Methoden der organischen Chemie, Vol 20E (1987) p. 1911-1924, incorporated herein by reference.

Surprisingly, the yields are on an 80 % level with respect to theory and no problems with emulsion forming occurred, although the product itself is easily dissolved/emulgated in water. The use as a reactive diluent for LER showed an expected moderate cutting power but surprisingly an enhancement of impact resistance by only minor reduced water swelling resistance.

The structure of the present invention is even superior to the state of the art in sizing agent technology compared to glycerol-TGE, due to the better water solubility.

The present invention provides thermoset products improving on these characteristics. The present invention provides significant, and in some instances surprising, improvements over conventional thermoset networks.

Also provided by the present invention are thermoset products that are prepared by curing the above thermosetting composition comprising (a) at least one thermosetting resin, and (b) at least one toughening agent; wherein at least one toughening agent is a glycidyl ether based on TMP-18EO. The thermoset products can also include at least one filler or fibrous reinforcement.

The present invention employing a glycidyl ether based on TMP-18EO (trimethylolpropane octadecaethoxilate) as modifier for resin systems, finds use for resins such as for example for epoxy systems, providing the resin with high impact resistance.

The modifier may also be used as a polyester adhesion promoter or a paper strengthener.

In one embodiment of the present invention, the modifier may be used as a paper chemical (wet strengthener), which can replace prior art wet strengtheners such as pentaerythrol-TGE.

In another embodiment of the present invention, the modifier may be used as a substitute for (poly)glycerol-PGE in aqueous sizing formulation for polyester based tire cord. Due to the enhanced water solubility, the modifier of the present invention showed improvement over known glycerol derivates.

The GE may be used as epoxy modifier; the present invention modifier enhances impact resistance by minor enhanced water swelling resistance, compared to TMP-TGE.

The GE may be used as sizing agent, the present invention modifier enhances the adhesion of polyester fibers to rubber; and is useful for example in the tire industry.

The special structure of the present invention advantageously is an important factor in the behavior of the GE product of the present invention.

The present thermoset products find use in any application in which a tough and highly moisture resistant network is desired. General applications include, for example, casting, potting, and encapsulation, and general products include coatings, composites, and/or laminates. Uses that are more specific include any one of electrical or electronic casting, electrical or electronic potting, electrical or electronic encapsulation, and specific products include electrical laminates, structural composites, photo- and solder-resists, protective coatings, conformal coatings, decorative coatings, and/or resin-coated copper foils.

In one embodiment of the present invention, the polymeric GE of the present invention is preferably used in combination with a liquid epoxy resin (LER), and optionally, with a standard reactive diluent and a standard amine hardener.

As an illustration of one embodiment of the present invention, a clear binder may be prepared by mixing a composition of the present invention with a liquid epoxy resin (LER) (A-component). The mixture may be cured with a curing agent such as a modified cycloaliphatic amine hardener (Polypox H 488/L, B-component). The cured product exhibits a E-modulus of at most about 2000 N/mm² according to test method DIN 53452 ISO 178, and a glass transition temperature of at least about 40° C according to test method DIN 65467/A. Generally, about 20 wt% of component (a) is mixed with about 80 wt% of the LER.

The use of the mentioned polymeric GE in combination with LER is only limited by the overall mechanical properties of the system itself. Concentrations up to 25 wt% in mixtures of diglycidyl ether of bisphenol A and diglycidyl ether of bisphenol F-resins are favorable and easily to obtain by simply blending the said components.

In general, the concentration of the PGE is from 1 wt% to about 50 wt%; preferably from about 4 wt% to about 40 wt%, and more preferably from about 5 wt% to about 25 wt%, based on the total weight of the composition. Below the concentration of 1 wt%, the effect is too low to alter the polymer matrix significantly; and above the concentration of 50 wt%, the mechanical and chemical properties of the cured system may tend to deteriorate.

### EXAMPLES

The following examples are illustrative of the present invention, and are not to be construed as limiting the scope of the present invention. Variations and equivalents of these examples will be apparent to those of skill in the art in light of the present disclosure. Unless otherwise stated, all percentages are by weight of the total composition.

Various terms and designations used in the Examples are explained as follow:
"Shore D-value" is hardness measured according ISO 868 DIN 53505 (needle impact depth); "Chemical Resistance" is a time depending measurement of shore D-values after the exposure of the binder's surface to different chemicals; the higher the shore D-value, the better the chemical resistance; Polypox H 488/L is a modified amine hardener available from UPPC GmbH; D.E.R. 331 is a diglycidyl bisphenol A liquid epoxy resin with an EEW of 182-192 g/equiv commercially available from The Dow Chemical Company; "TMP-18EO-TGE" stands for trimethylolpropane octadecaethoxilate polyglycidyl ether of the present invention; Ruetapox Flexibilisator WF is an epoxidized polybutylenglycol product available from Hexion; Polypox R20 is a TMP-TGE product available from UPPC; Polypox R19 is an epoxy. polypropyleneglycol product available from UPPC, and this product is similar to D.E.R. 732 a polyproyleneglycol product available from The Dow Chemical Company; Polypox R11 is a cyclohexandimethanol-DGE product available from UPPC; "Hac 10 %" stands for 10 % acetic acid; "BPG 5b" stands for a mixture of each 46 volume % methanol and isopropanol and 4 volume % water; "Xylol" means xylene, isomeric mixture; "Diesel" means diesel oil; and "rH" stands for relative humidity.

The following standard analytical equipments and methods are used in the Examples:

The epoxy equivalent weight (EEW, g/equiv.) of an epoxy resin is measured according to test method DIN 16945. In general, the EEW of the epoxy resin used in the present invention is from about 100 to about 1000, preferably from about 120 to about 500, and most preferably from about 150 to about 250.

The viscosity (mPas) of an epoxy resin is measured at 25 °C according to test method DIN 53018. In general, the viscosity of the epoxy resin used in the present invention is from 0 mPas to about 100000 mPas, preferably from about 1 mPas to about 50000 mPas, and most preferably from about 5 mPas to about 20000 mPas.

The pot life (minutes) of an epoxy resin is measured according to test method Gelnorm Geltimer TC. In general, the pot life of the epoxy resin used in the present invention is from 1 minute to about 600 minutes, preferably from about 5 minutes to about 120 minutes, and most preferably from about 15 minutes to about 75 minutes.

The surface of an epoxy resin thermoset product is measured at 23 °C/50 % rH (relative humidity), by visual inspection. Generally, the surface of the resin thermoset should be smooth, glossy, and shiny without any blemishes or other defects. The surface properties for the thermoset resin is designated as "good", "bad" or "fair." For example, in the Examples, a "+" is a "good" surface quality which means a smooth, glossy and shiny surface. A "+/-" is a fair surface quality which means that a few bad surface traits are visible on the surface, but mostly good surface traits are visible on the surface. A "-" is a "bad" surface quality which means the surface contains distortions, blemishes, or a carbamate reaction product on the surface (i.e., blushing or whitening); or the surface is tacky.

The Shore D after 7 days curing @ 23 °C/50 % rH of an epoxy resin is measured at 25 °C according to test method DIN 53505. In general, the Shore D hardness of the epoxy resin used in the present invention is from about 10 to about 95, preferably from about 20 to about 90, and most preferably from about 35 to about 85.

The Tg (2^{nd} run, °C) of an epoxy resin is measured according to test method DIN 65467 A. In general, the Tg of the epoxy resin used in the present invention is from 0 °C to about 120°C, preferably from about 10°C to about 100°C, and most preferably from about 40 °C to about 90 °C.

The E-modulus (N/mm²) of an epoxy resin is measured according to test method EN ISO 178. In general, the E-modulus of the epoxy resin used in the present invention is from 0 N/mm² to about 5000 N/mm², preferably from about 100 N/mm² to about 3500 N/mm², and most preferably from about 500 N/mm² to about 2000 N/mm².

The water swelling test of a thermoset resin sample was carried out as follows: First, because a glycidyl ether is not used alone as an A-component, a mixture of 20 wt% with liquid epoxy resin (LER), such as for example D.E.R. 331, is prepared. This mixture is mixed (1 amine eq. with 1 epoxy eq.) and cured at room temperature (about 23 °C) with an amine adduct hardener (B-component). Cured 2 mm thick films (and films of other composition, i.e variations of the GE) were immersed in demineralized water and the weight increase is measured against time. The more the weight is increased the worse is the water swelling resistance.

The chemical resistance of thermoset resin test samples are tested for different reactive diluents/modifiers (20% added to Standard Bis A-resin (e.g. D.E.R. 331), cured with a modified amine hardener, Polypox H 488/L) in different media according to the following method: A 2 mm film is fully cured (7 days (7d) at room temperature (about 23 °C). A cotton pad is soaked with a test liquid such as for example, diesel, alcohol mixture, acetic acid (Hac). The cotton pad is placed on the film's surface and covered to prevent evaporation of the test liquid. The decrease in Shore D hardness over a predetermined period of time is a good indication for the resistance against the different test liquids. Normally the 7d value is taken in terms of percentile decrease.

The testing results can be seen in Figure 1 and Figures A-D. The corners of the diamond in each of the figures can be compared to determine the Shore D hardness of the samples. The "length" of the corner is the Shore D hardness after 7 days divided by the initial value, showing that a diglycidyl ether of bisphenol A resin modified with for example TMP 18EO TGE can compete with other known modifiers.

### Synthesis Example 1 - Synthesis of TMP-18EO-TGE

To 1100 grams (g) of Simulsol TOZE (TMP+18EO from Seppic) and 8 g BF₃ ethyl etherate, 318 g of ECH were added within 2°15' @ 85 °C, 2° post reaction. Addition of 700 g toluene, 2-stage elimination with 395 g and 213 g of 25 wt% caustic soda, neutralizing with 4 g 85 % phosphoric acid, washing twice, and using vacuum distillation to remove the solvent (155 °C, 23 mbar) yielded 1198 g of epoxy compound. The analytical values of the resultant product are: viscosity @ 25 °C: 372 mPas and EEW of 524 g/equivalent.

### Example 1 and Comparative Example A

The TMP-18EO TGE, prepared in Synthesis Example 1, was used as a reactive diluent in this example and compared with a commercially available GE product, Polypox R20 (TMP-TGE) [Comparative Example A].

A mixture of each GE with diglycidyl ether of bisphenol A (DGEBA) was prepared. The EEW, viscosity and pot life of each composition was determined. The results of the measured properties show that the cutting power is lowered and the pot-life is doubled for Example 1. In a cured system with a modified aliphatic amine hardener, the properties of both systems are quite the same except for the E-modulus property. The results show a combination of a similar Tg and a significantly lower E-modulus for Example 1; and such results indicates that TMP-18EO-TGE is not acting as a reactive diluent but as a toughener.

The EEW, and viscosity properties of a mixture, comprising a DGEBA resin and reactive diluent (80% DGEBA resin and 20 % GE) were measures and shown in the first two columns of Table I below. The other properties shown in Table I are for a reaction composition of hardener and resin; and a cured resin, which is cured with Polypox 488/L.

The chemical resistance test described above was used to provide the results shown in the graphical diagram of Figures 1A-1E. A 2 mm film of the cured system is loaded with a cotton pad soaked with testing liquids (cf. corners of the diamonds). The "length" of the corner is the Shore D hardness after 7 days divided by the initial value, showing that diglycidyl ether of Bisphenol A modified with for example TMP 18EO TGE can compete with other modifiers. The diamond's area is proportional to the chemical resistance. The results of the chemical resistance testing is described in Table I.

**Table I**

| Example | Glycidyl Ether | EEW (g/equiv.) | viscosity @ 25°C (mPas) | pot life (minutes) | surface @ 23 °C 50 % rH* | surface @ 13 °C 80 % rH* | shore D after 7 days curing @ 23°C 50 % rH | shore D after 7 days curing @ 13 °C 80 % rH | Tg (2^{nd} run, °C) | E-Modulus (N/mm²) |
|---|---|---|---|---|---|---|---|---|---|---|
| Example1 | TMP-18EO-TGE | 215 | 4100 | 59 | + | - | 74 | 69 | 64 | 1376 |
| Comparative Example. A | Polypox R 20 (TMP-TGE) | 175 | 2950 | 34 | + | +/- | 81 | 77 | 63 | 2497 |

| | | | | | | | | | | |
|---|---|---|---|---|---|---|---|---|---|---|
| *NOTES for Table I: + = good = smooth, glossy and shiny +/- = fair = few "-" traits but mostly "+" traits - = bad = surface distortion, blemishes, blushing, or tackiness | | | | | | | | | | |

The water swelling test described above was used to provide the results shown in the graphical diagram of Figure 2. The diagram of Figure 2 shows the water uptake of a cured system. The results described in Figure 2 show that the water uptake is greater for a TMP 18EO TGE modified system than for other systems but the results for the TMP 18EO TGE modified system is surprisingly better than expected.

## Claims

1. A thermosettable resin composition comprising (a) at least one thermosetting epoxy resin; and (b) at least one toughening agent; wherein the at least one toughening agent is a polyglycidyl ether derived from a triol having at least 9 moles ethylene oxide added to the triol, before converting the triol into the corresponding glycidyl ether, wherein the at least one thermosetting epoxy resin (a) is present in the composition in an amount of from 75 weight percent to 95 weight percent, and the at least one toughening agent (b) is present in the composition in an amount of from 5 weight percent to 25 weight percent, both based on the combination of components (a) and (b).

2. The composition of claim 1, wherein the at least one toughening agent is a polyglycidyl ether of the following Formula I; 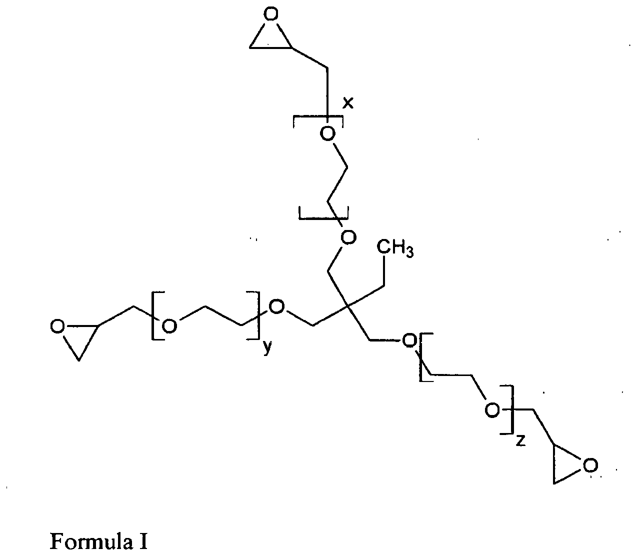 wherein with x,y,z are independently of each other >3 and x+y+z is about 18.

3. The composition of claim 2, wherein the polyglycidyl ether is a glycidyl ether based on trimethylolpropane octadecaethoxilate.

4. The composition of claim 3, wherein the trimethylolpropane octadecaethoxilate is a reaction product of the polymeric conversion product of 1 mole TMP with 18 moles EO, wherein 18 is the average number of EO moieties connected to 1 TMP molecule; and wherein > 3 molecules EO per OH-group is an idealized number.

5. The composition of claim 4, wherein the reaction product has a distribution with an average degree of substituted initial OH groups of about 2.5 and an average chain length of about 7.3.

6. The composition of claim 4, wherein the polyglycidylether of TMP-18EO is the reaction product of 1 mole TMP-18EO with 3 moles ECH and subsequently NaOH.

7. The composition of claim 5, wherein the ratio of TMP-18EO to ECH is from 1:2 up to 1:6.

8. The composition of claim 1, further comprising at least one hardener for curing the epoxy resin; wherein the at least one hardener is chosen from amines, polyamidoamines, phenolic resins, carboxylic acids, carboxylic anhydrides, polyol resins; and mixtures thereof; and at least one catalyst for a reaction between the at least one epoxy resin and the at least one hardener.

9. The composition of claim 1, further comprising at least one filler, fibrous reinforcement, solvent, high boiling modifier, curing inhibitor, wetting agent, colorant, thermoplastic, processing aid, dye, UV-blocking compound, fluorescent compound, toughening agent different from component (b), or a mixture thereof.

10. A thermoset product prepared by curing a thermoset composition according to any one of the preceding claims.

11. A clear binder product comprising a cured mixture of
(a) a composition according to claim 1 and
(b) a liquid epoxy resin (LER) (A-component) cured with a modified cycloaliphatic amine hardener (B-component);
wherein the product exhibits an E-modulus of at most 2000 N/mm² according to test method DIN 53452 ISO 178, and a glass transition temperature of at least 40 °C according to test method DIN 65467/A.

12. A process for making a thermosettable composition comprising mixing (a) at least one thermosetting epoxy resin, and (b) at least one toughening agent; wherein the at least one toughening agent is a polyglycidyl ether derived from a triol having at least 9 moles ethylene oxide added to the triol, before converting the triol into the corresponding glycidyl ether, wherein the at least one thermosetting epoxy resin (a) is used in an amount of from 75 weight percent to 95 weight percent, and the at least one toughening agent (b) is used in an amount of from 5 weight percent to 25 weight percent, both based on the combination of components (a) and (b).

13. A process for making a thermoset product comprising curing the thermosettable composition of claim 1.

## Patentansprüche

1. Eine wärmehärtbare Harzzusammensetzung, beinhaltend (a) mindestens ein wärmehärtendes Epoxidharz; und (b) mindestens einen Elastifikator; wobei der mindestens eine Elastifikator ein Polyglycidylether ist, abgeleitet von einem Triol mit mindestens 9 Mol Ethylenoxid, das zu dem Triol zugegeben wurde, bevor das Triol in den entsprechenden Glycidylether umgewandelt wird, wobei das mindestens eine wärmehärtende Epoxidharz (a) in der Zusammensetzung in einer Menge von 75 Gewichtsprozent bis 95 Gewichtsprozent vorliegt, und der mindestens eine Elastifikator (b) in der Zusammensetzung in einer Menge von 5 Gewichtsprozent bis 25 Gewichtsprozent, jeweils bezogen auf die Kombination der Komponenten (a) und (b), vorliegt.

2. Zusammensetzung gemäß Anspruch 1, wobei der mindestens eine Elastifikator ein Polyglycidylether der folgenden Formel I ist; 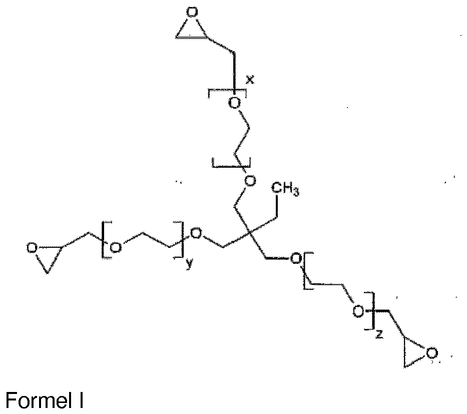 wobei x, y, z unabhängig voneinander >3 sind und x+y+z ungefähr 18 ist.

3. Zusammensetzung gemäß Anspruch 2, wobei der Polyglycidylether ein Glycidylether auf Basis von Trimethylolpropan-Octadecaethoxilat ist.

4. Zusammensetzung gemäß Anspruch 3, wobei das Trimethylolpropan-Octadecaethoxilat ein Reaktionsprodukt des Polymer-Umwandlungsproduktes von 1 Mol TMP mit 18 Mol EO ist, wobei 18 die Durchschnittszahl von EO-Anteilen, verbunden mit 1 TMP-Molekül ist; und wobei >3 Moleküle EO pro OH-Gruppe eine Idealzahl ist.

5. Zusammensetzung gemäß Anspruch 4, wobei das Reaktionsprodukt eine Verteilung mit einem durchschnittlichen Grad von substituierten anfänglichen OH-Gruppen von etwa 2,5 und einer durchschnittlichen Kettenlänge von etwa 7,3 aufweist.

6. Zusammensetzung gemäß Anspruch 4, wobei der Polyglycidylether von TMP-18EO das Reaktionsprodukt von 1 Mol TMP-18EO mit 3 Mol ECH und infolgedessen NaOH ist.

7. Zusammensetzung gemäß Anspruch 5, wobei das Verhältnis von TMP-18EO zu ECH von 1 : 2 bis zu 1 : 6 beträgt.

8. Zusammensetzung gemäß Anspruch 1, ferner beinhaltend mindestens einen Härter zum Aushärten des Epoxidharzes; wobei der mindestens eine Härter gewählt ist aus Aminen, Polyamidoaminen, Phenolharzen, Carbonsäuren, Carbonsäureanhydriden, Polyolharzen; und Mischungen davon; und mindestens einen Katalysator für eine Reaktion zwischen dem mindestens einen Epoxidharz und dem mindestens einen Härter.

9. Zusammensetzung gemäß Anspruch 1, ferner beinhaltend mindestens einen Füllstoff, eine Faserverstärkung, ein Lösungsmittel, einen Modifikator mit hohem Siedepunkt, einen Härtungsinhibitor, ein Netzmittel, ein Farbmittel, einen Thermoplasten, ein Verarbeitungshilfsmittel, einen Farbstoff, eine UV-blockierende Verbindung, eine fluoreszierende Verbindung, einen Elastifikator, der sich von Komponente (b) unterscheidet, oder eine Mischung davon.

10. Ein wärmehärtendes Produkt, das durch Aushärten einer wärmehärtenden Zusammensetzung gemäß einem der vorhergehenden Ansprüche zubereitet wird.

11. Ein klares Bindemittelprodukt, beinhaltend eine ausgehärtete Mischung aus
(a) einer Zusammensetzung gemäß Anspruch 1 und
(b) einem flüssigen Epoxidharz (LER) (A-Komponente), das mit einem modifizierten cycloaliphatischen Amin-Härtungsmittel (B-Komponente) ausgehärtet wird;
wobei das Produkt einen E-Modul von höchstens 2 000 N/mm² gemäß Testmethode DIN 53452 ISO 178 und eine Glasübergangstemperatur von mindestens 40 °C gemäß Testmethode DIN 65467/A aufzeigt.

12. Ein Verfahren zur Herstellung einer wärmehärtbaren Zusammensetzung, beinhaltend das Mischen (a) mindestens eines wärmehärtenden Epoxidharzes und (b) mindestens eines Elastifikators; wobei der mindestens eine Elastifikator ein Polyglycidylether ist, abgeleitet von einem Triol mit mindestens 9 Mol Ethylenoxid, das zu dem Triol zugegeben wurde, bevor das Triol in den entsprechenden Glycidylether umgewandelt wird, wobei das mindestens eine wärmehärtende Epoxidharz (a) in einer Menge von 75 Gewichtsprozent bis 95 Gewichtsprozent verwendet wird, und der mindestens eine Elastifikator (b) in einer Menge von 5 Gewichtsprozent bis 25 Gewichtsprozent, jeweils bezogen auf die Kombination von Komponenten (a) und (b), verwendet wird.

13. Ein Verfahren zur Herstellung eines wärmehärtenden Produktes, beinhaltend das Aushärten der wärmehärtbaren Zusammensetzung gemäß Anspruch 1.

## Revendications

1. Une composition de résine thermodurcissable comprenant (a) au moins une résine époxy thermodurcissante ; et (b) au moins un agent de renforcement ; dans laquelle l'au moins un agent de renforcement est un polyglycidyl éther dérivé d'un triol ayant au moins 9 moles d'oxyde d'éthylène ajoutées au triol, avant de convertir le triol en glycidyl éther correspondant, dans laquelle l'au moins une résine époxy thermodurcissante (a) est présente dans la composition dans une quantité allant de 75 pour cent en poids à 95 pour cent en poids, et l'au moins un agent de renforcement (b) est présent dans la composition dans une quantité allant de 5 pour cent en poids à 25 pour cent en poids, tous deux rapportés à la combinaison des composants (a) et (b).

2. La composition de la revendication 1, dans laquelle l'au moins un agent de renforcement est un polyglycidyl éther de la Formule I suivante : 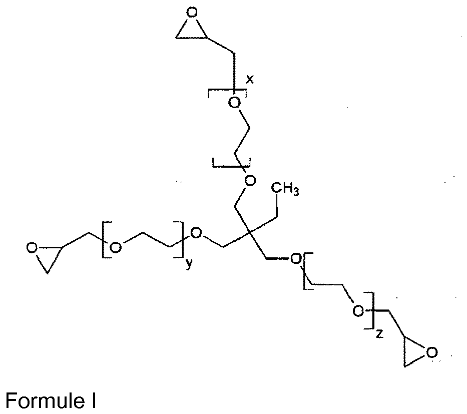 dans laquelle avec x, y, z sont indépendamment les uns des autres > 3 et x + y + z vaut environ 18.

3. La composition de la revendication 2, dans laquelle le polyglycidyl éther est un glycidyl éther à base d'octadéca-éthoxylate de triméthylolpropane.

4. La composition de la revendication 3, dans laquelle l'octadéca-éthoxylate de triméthylolpropane est un produit de réaction du produit de conversion polymérique de 1 mole de TMP avec 18 moles d'OE, dans laquelle 18 est le nombre moyen de groupements OE raccordés à 1 molécule de TMP ; et dans laquelle > 3 molécules d'OE par groupe OH est un nombre idéalisé.

5. La composition de la revendication 4, dans laquelle le produit de réaction a une distribution avec un degré moyen de groupes OH initiaux substitués d'environ 2,5 et une longueur de chaîne moyenne d'environ 7,3.

6. La composition de la revendication 4, dans laquelle le polyglycidyl éther de TMP-18OE est le produit de réaction de 1 mole de TMP-18OE avec 3 moles d'ECH et subséquemment NaOH.

7. La composition de la revendication 5, dans laquelle le rapport de TMP-18OE à ECH va de 1/2 jusqu'à 1/6.

8. La composition de la revendication 1, comprenant en outre au moins un durcisseur destiné à durcir la résine époxy ; dans laquelle l'au moins un durcisseur est choisi parmi des amines, des polyamidoamines, des résines phénoliques, des acides carboxyliques, des anhydrides carboxyliques, des résines polyol ; et des mélanges de ceux-ci ; et au moins un catalyseur destiné à une réaction entre l'au moins une résine époxy et l'au moins un durcisseur.

9. La composition de la revendication 1, comprenant en outre au moins une charge, un renforcement fibreux, un solvant, un modificateur d'ébullition élevée, un inhibiteur de durcissement, un agent mouillant, un colorant, un thermoplastique, un auxiliaire de traitement, une teinture, un composant bloquant les UV, un composant fluorescent, un agent de renforcement différent du composant (b), ou un mélange de ceux-ci.

10. Un produit thermodurci préparé en durcissant une composition thermodurcie selon l'une quelconque des revendications précédentes.

11. Un produit liant clair comprenant un mélange durci de
(a) une composition selon la revendication 1 et
(b) une résine époxy liquide (REL) (composant A) durcie avec un durcisseur amine cycloaliphatique modifié (composant B) ;
dans lequel le produit fait preuve d'un module E de 2 000 N/mm² au plus selon la méthode test de la norme DIN 53452 ISO 178, et d'une température de transition vitreuse de 40 °C au moins selon la méthode test de la norme DIN 65467/A.

12. Un procédé pour réaliser une composition thermodurcissable comprenant le fait de mélanger (a) au moins une résine époxy thermodurcissante et (b) au moins un agent de renforcement ; dans lequel l'au moins un agent de renforcement est un polyglycidyl éther dérivé d'un triol ayant au moins 9 moles d'oxyde d'éthylène ajoutées au triol, avant de convertir le triol en glycidyl éther correspondant, dans lequel l'au moins une résine époxy thermodurcissante (a) est utilisée dans une quantité allant de 75 pour cent en poids à 95 pour cent en poids, et l'au moins un agent de renforcement (b) est utilisé dans une quantité allant de 5 pour cent en poids à 25 pour cent en poids, tous deux rapportés à la combinaison des composants (a) et (b).

13. Un procédé pour réaliser un produit thermodurci comprenant le fait de durcir la composition thermodurcissable de la revendication 1.
